# FASCICULE DE BREVET EUROPEEN

(11) **EP 3 385 115 B1**
(45) Date de publication et mention de la délivrance du brevet: **10.06.2020**
(21) Numéro de dépôt: 18165510.1
(22) Date de dépôt: 03.04.2018
(51) Int. Cl.: B60N 2/34, B64D 11/06

(54) **FAUTEUIL POUR PASSAGER DE VÉHICULE COMPORTANT UNE CONFIGURATION REPOS**
SESSEL FÜR PASSAGIER EINES FAHRZEUGS MIT RUHEKONFIGURATION
ARMCHAIR FOR VEHICLE PASSENGER COMPRISING A RESTING CONFIGURATION

(30) Priorité: 04.04.2017 FR 1752932
(43) Date de publication de la demande: 10.10.2018
(73) Titulaire: Stelia Aerospace, 17300 Rochefort (FR)
(72) Inventeur: TEXERAUD, Laurent, 17220 CLAVETTE (FR); TRILLAUD, Benoît, 17620 ECHILLAIS (FR); CANAL, Christophe, 17870 BREUIL-MAGNE (FR)
(74) Mandataire: Ipside

(56) Documents cités:
- EP-A2- 2 762 354
- WO-A1-2015/097630

## Description

### DOMAINE DE L'INVENTION

L'invention appartient au domaine des sièges de passagers tels que les fauteuils utilisés dans l'aménagement des espaces passagers des véhicules et plus particulièrement des aéronefs.

L'invention concerne un siège convertible en lit et comportant, entre la position « assis » et la position « couché », une position intermédiaire de « repos » dans laquelle le passager est placé dans une position relaxante.

Plus particulièrement, dans l'invention, l'agencement de la structure du siège permet de modifier continûment la position de l'assise et la position du dossier entre les positions assis et couché, en assurant le confort du passager lorsque le siège est dans la position intermédiaire de repos.

### ART ANTERIEUR

Dans le domaine du transport de passagers, en particulier des aéronefs, les sièges proposés aux passagers sont des équipements ayant un fort impact commercial.

Les compagnies aériennes qui exploitent les aéronefs sont donc exigeantes en confort proposé aux passagers, mais restent également attentives aux coûts des équipements tant lors de leur acquisition que pour leur maintenance.

Dans les classes supérieures, premières classes et classes affaire, les sièges des cabines d'aéronef disposent généralement de capacités de conversions pour transformer le siège entre la position assis, imposée dans les phases de décollage et d'atterrissage, et une position couché proche de l'horizontale.

Pour réaliser une conversion entre une position assis et une position couché, l'assise du siège est généralement déplacée vers l'avant par glissement ou roulement sur des rails, généralement au moyen d'un premier moteur, et le dossier est incliné vers l'arrière, jusqu'à se placer sensiblement aligné avec l'assise du siège, au moyen d'un deuxième moteur.

Dans cette conversion, le mouvement vers l'avant du siège est nécessaire pour que le dossier incliné ne pénètre pas dans le volume situé derrière le siège et généralement dévolu à un autre passager, et souvent délimité par une coque d'habillage fixe.

Un inconvénient de cette solution tient au manque de confort lorsque le siège est dans une position intermédiaire de repos dans laquelle le dossier n'est que partiellement incliné vers l'arrière.

Cette solution, qui n'agit en pratique que sur l'angle formé au niveau des vertèbres lombaires de la colonne vertébrale, conduit à un glissement du passager vers l'avant, phénomène également désigné « sous-marinage » lorsque le passager à tendance à glisser sous le siège situé en avant du sien.

Pour éviter ce phénomène de glissement, une solution consiste à relever l'avant de l'assise lorsque le dossier est incliné vers l'arrière pour que la surface d'assise présente une inclinaison vers l'arrière et évite la tendance naturelle du passager à glisser vers l'avant. Dans ce cas, le bord avant de l'assise s'éloigne du plancher et les pieds du passager dans de nombreux cas ne sont plus en contact avec le plancher auquel est fixé le siège. Cette configuration, dont l'objectif est d'améliorer le confort, devient rapidement inconfortable en raison de la compression que le passager ressent au niveau des creux poplités.

En outre ce mouvement supplémentaire de l'assise nécessite la mise en œuvre d'un actionneur supplémentaire ce qui va à l'encontre des objectifs généralement recherchés de diminuer la masse et le coût d'un siège. Le document WO 2015/097630 A1 décrit par exemple un siège d'aéronef convertible en lit, présentant trois positions : « assis », « repos » et « couché ». Dans ce siège, un axe arrière lié à l'assise du siège suit une trajectoire en V lors de la conversion, et l'assise se déplace longitudinalement lors d'une conversion et lors de ce déplacement elle est guidée par un rail de l'assise dans laquelle glisse un chariot articulé autour d'un axe fixe sur une structure de support du siège. L'assise bascule donc autour d'un axe qui se déplace par rapport à l'assise.

### PRÉSENTATION DE L'INVENTION

La présente invention apporte une solution pour une conversion simplifiée d'un siège entre différentes positions : assis, repos, couché, qui évite la mise en œuvre d'actionneurs supplémentaires à ceux nécessaires au déplacement du siège et à l'inclinaison du dossier, et en assurant le confort du passager dans la position de repos.

Suivant l'invention, un siège pour passager d'un véhicule, comporte une assise et un dossier, une structure d'assise étant solidaire d'une embase par laquelle le siège peut être fixé au véhicule.

Le siège comporte au moins une position « assis », une position « couché » et au moins une position « repos », intermédiaire entre la position « assis » et la position « couché ».

En outre, dans le siège :
- un plateau d'assise de la structure d'assise est mobile en rotation autour d'un axe arrière de ladite assise, orienté suivant une direction transversale Y horizontale du siège et perpendiculaire à un plan vertical XZ de symétrie d'ensemble du siège, ledit axe arrière étant situé suivant une direction longitudinale X du siège du côté d'un bord arrière de l'assise ;
- le plateau d'assise est mobile en rotation autour d'un axe de basculement fixe par rapport à la structure assise, parallèle à l'axe arrière, situé suivant la direction longitudinale X, en avant dudit axe arrière et entre le bord arrière de l'assise et un bord avant de l'assise ;
- la structure d'assise est déplacée vers l'avant lors d'une conversion du siège depuis la position « assis » vers la position « couché », conversion pendant laquelle :
   + l'axe de basculement est déplacé sur l'embase en suivant une première trajectoire descendante par rapport à la direction longitudinale X horizontale ;
   + l'axe arrière est déplacé sur l'embase en suivant une seconde trajectoire continue comportant successivement suivant le sens du déplacement vers l'avant de l'assise :
      - un segment arrière sensiblement horizontal ;
      - un segment intermédiaire arrière ayant une pente descendante supérieure à une pente suivie par l'axe de basculement ;
      - un segment intermédiaire avant ayant une pente montante ;
      - un segment avant sensiblement horizontal.

Ainsi, lors du déplacement de l'assise lors d'une conversion de la position du siège par un occupant du siège, le déplacement de l'assise est guidé en modifiant la hauteur et l'inclinaison de l'assise pour adapter cette hauteur et cette inclinaison à chacune des positions souhaitées pour procurer un maintien confortable de l'occupant du siège.

Avantageusement, l'axe de basculement est porté par au moins un chariot, monté sur une glissière de l'embase assurant un guidage du chariot suivant la première trajectoire lorsque la structure d'assise est déplacée dans un sens longitudinal.

Avantageusement, la seconde trajectoire suivie par l'axe arrière est déterminée par au moins une rampe de guidage de l'embase dans laquelle rampe de guidage circule, lorsque la structure d'assise est déplacée dans un sens longitudinal, au moins un galet ou un patin de l'assise, un axe du galet ou d'un palier du patin déterminant l'axe arrière.

De telles glissières et rampes de guidage permettent de définir pour chacune de la première trajectoire et de la seconde trajectoire une forme voulue pour donner à la structure d'assise un angle d'inclinaison et une position verticale recherchée pour chaque position longitudinale du siège.

Dans un mode de réalisation, le segment intermédiaire arrière et le segment intermédiaire avant déterminent à leur jonction un point bas, à une hauteur Hmin suivant une direction verticale Z par rapport à un plan horizontal de référence, de la seconde trajectoire, auquel point bas se situe l'axe arrière lorsque le siège est dans la position « repos », la hauteur Hmin étant telle que, compte tenu des caractéristiques dimensionnelles de la structure de l'assise et de l'embase, lorsque le siège est dans la position « repos » :
- le plateau d'assise est basculé vers l'arrière par rapport à la position de dudit plateau d'assise dans la position « assis » du siège ;
- une hauteur résultante par rapport au plan de référence d'un bord avant de l'assise est sensiblement à la hauteur dudit bord avant de l'assise lorsque le siège est dans la position « assis ».

Ainsi l'occupant du siège retrouve au niveau de ses jambes une configuration proche, sinon identique, dans la position « assis » et dans la position « repos », qui lui permet de conserver pour les deux positions ses pieds sur le plancher, ou sur un repose de pieds idéalement réglé pour lui sans en modifier le réglage.

Dans une forme de réalisation, lorsque l'axe arrière est situé à la jonction du segment arrière et du segment intermédiaire arrière, l'assise est horizontale ou inclinée vers l'avant.

Dans cette position du siège, située entre la position « assis » et la position « repos », l'occupant du siège est globalement moins incliné vers l'arrière et moins « enfoncé » dans le siège de sorte qu'il lui est plus facile de se lever, en particulier pour les personnes pouvant avoir des difficultés, par exemple en raison de leur âge ou d'un handicap physique.

Dans des formes ergonomiques de réalisation :
- le segment arrière sensiblement horizontal est, considéré de l'arrière vers l'avant, incliné vers le bas au plus d'un angle correspondant à un angle de la première trajectoire descendante, et inclinée vers le haut au plus d'un angle de 10 degrés par rapport à un plan horizontal de référence, typiquement d'un angle de zéro degré ;
- lorsque le siège est dans la position « assis », l'assise est inclinée vers l'arrière d'un angle par rapport à un plan horizontal de référence compris entre 5 et 15 degrés, typiquement environ 10 degrés ;
- lorsque le siège est dans la position « repos », l'assise est inclinée vers l'arrière d'un angle par rapport à un plan horizontal de référence compris entre 18 et 30 degrés, typiquement environ 22 degrés ;
- lorsque le siège est dans la position « couché », l'assise est sensiblement horizontale ou inclinée d'un angle par rapport à un plan horizontal de référence inférieur ou égal à 5 degrés en valeur absolue ;
- chaque glissière de l'embase est inclinée vers l'avant d'un angle compris entre 2 et 8 degrés par rapport à un plan horizontal de référence, typiquement environ 5 degrés.

Dans une forme de réalisation, le siège comporte deux glissières d'embase, deux chariots supportant le plateau d'assise, deux rampes de guidage fixes de l'embase, lesdites deux glissières, lesdits deux chariots et lesdites deux rampes de guidage étant agencés sensiblement symétriquement par rapport au plan vertical XZ de symétrie d'ensemble du siège.

Il est ainsi formé une structure d'une grande stabilité, en particulier latérale, dans laquelle les efforts sont répartis latéralement sur parties mobiles entre elles assurant le transfert des efforts de l'assise et du dossier vers l'embase du siège.

Dans une forme de réalisation, la structure de dossier est articulée sur la structure de l'assise autour d'un axe de charnière parallèle à la direction transversale Y, situé à proximité d'un bord arrière de la structure d'assise, de sorte à déterminer un angle entre l'assise et le dossier réglable en utilisation du siège entre une valeur minimale sensiblement égale à 90 degrés, adaptée à la position « assis », et une valeur maximale sensiblement égale à 180 degrés, adaptée à la position « couché ».

Avantageusement, au moins une butée de l'embase coopère avec une première surface d'arrêt de la structure de dossier pour limiter le déplacement angulaire du dossier vers l'avant et coopère avec une deuxième surface d'arrêt de la structure de dossier pour limiter le déplacement angulaire du dossier vers l'arrière.

Dans une forme de réalisation, le déplacement de l'assise entre la position « assis » et la position « couché » est assuré par un seul actionneur, les différentes positions angulaires de l'assise résultant de la position longitudinale de la structure d'assise par rapport à l'embase du siège.

### PRÉSENTATION DES FIGURES

L'invention est décrite en référence aux figures, données au titre d'un exemple non limitatif d'un mode de réalisation de l'invention, qui représente de manière schématique :
Figure 1a : une vue isométrique d'un siège simplifié, comportant une assise et un dossier, fixé sur un plancher ;
Figure 1b : une vue isométrique de la structure du siège de la figure 1a débarrassé des matelas et panneaux d'habillage pour révéler les éléments mécaniques principaux du siège ;
Figure 1c : une vue partielle éclatée de la structure de l'assise du siège de la figure 1a ;
Figures 2a, 2b, 2c : une vue de profil de la structure du siège de la figure 1b illustrant la position relative des principaux éléments du siège par rapport à une embase lorsque le siège est en position « assis », figure 2a, en position « repos », figure 2b, et en position « couché », figure 2c ;
Figure 3 : en vue de profil, un exemple de rail de guidage d'un galet d'assise

Sur les différentes figures, les dessins ne sont pas nécessairement représentés avec une même échelle.

### DESCRIPTION DÉTAILLÉ D'UN MODE DE REALISATION

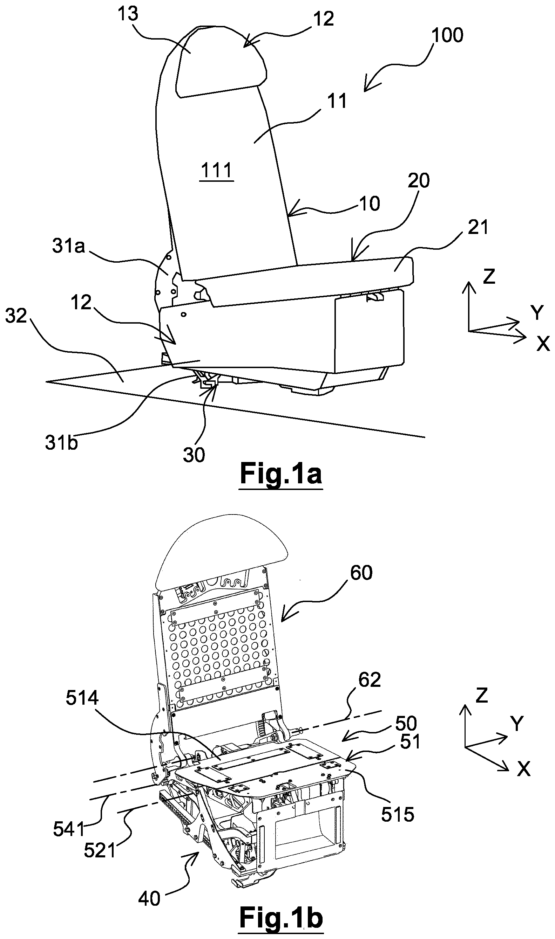

La figure 1a illustre un exemple d'un siège 100 suivant l'invention dans la position assis.

Pour les besoins de la description il sera fait appel à un système d'axes conventionnel, lié au siège, avec un axe longitudinal X, horizontal orienté positivement vers l'avant du siège, un axe vertical Z, orienté positivement vers le haut, et un axe latéral Y, perpendiculaire à un plan défini par les directions horizontale et verticale, orienté positivement vers la gauche du siège.

Les termes avant, arrière, haut bas et les termes ou expressions similaires relatifs aux sens ou aux directions font référence aux positions, sens ou directions qui leurs seraient données par un utilisateur du siège en position assis dans ledit siège. Ainsi l'avant du siège correspond à la direction vers laquelle regarde l'occupant assis dans le siège, sans tourner la tête, indépendamment de l'orientation que peut avoir le siège par rapport au sens de déplacement d'un véhicule dans lequel il est installé.

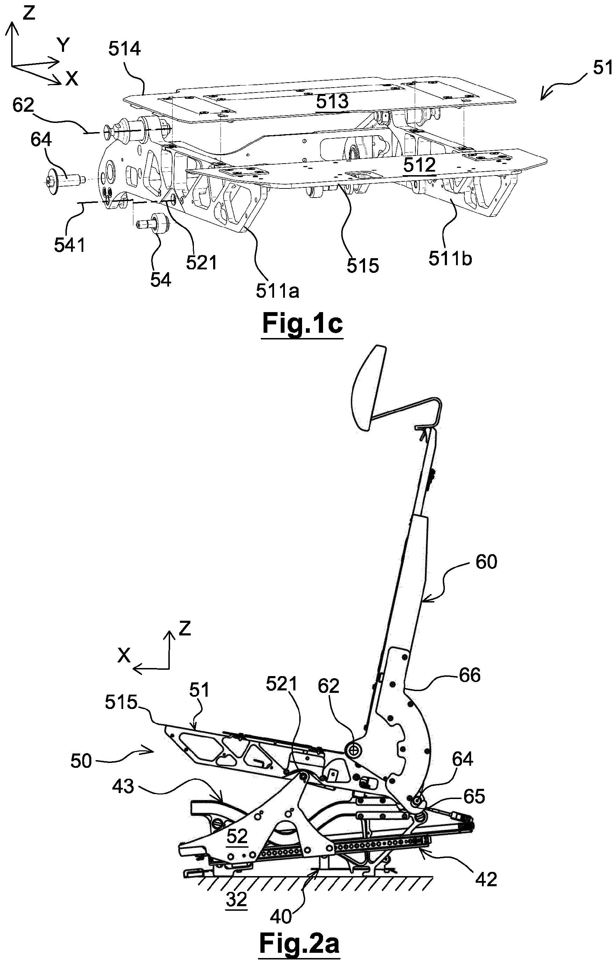

De manière connue, le siège de la figure 1 comporte une assise 20 et un dossier 10. Le siège est ici simplifié et dépouillé d'accessoires non nécessaires à la présentation de l'invention ni à sa compréhension, par exemple des accoudoirs, qui peuvent être présents ou non sur un siège de l'invention.

Le siège comporte également une structure 30, partiellement visible sur la figure 1a, qui dans le siège est recouverte par des matelas, matelas d'assise 21 et matelas de dossier 11, et des panneaux d'habillage 12 pour des raisons de confort, d'esthétique et de sécurité.

La figure 1b illustre le siège présenté sur la figure 1a dépourvu des matelas et des panneaux d'habillages de sorte à laisser apparente la structure 30.

La structure est partielle en ce que certains éléments non utiles à la présentation de l'invention ne sont pas représentés, par exemple ladite structure est représentée sans détail des mécanismes d'appui-tête, de repose jambes, d'appui lombaire, d'accoudoir, de systèmes de verrouillage des mouvements ...

L'Homme du Métier disposera sans difficulté sur le siège qui est décrit les éléments nécessaires ou optionnels pour le siège dans le cas d'une application particulière.

La structure, qui apporte au siège une résistance et une rigidité pour supporter le poids d'un occupant dans toutes conditions d'utilisation prévues dudit siège, permet de transmettre les efforts à une autre structure qui doit porter le siège, par exemple un plancher 32 de véhicule auquel le siège est fixé.

La structure du siège présentée sur la figure 1b montre trois sous ensembles principaux :
- une structure d'embase ou embase 40
- une structure d'assise ou assise 50
- une structure de dossier ou dossier 60

Afin de simplifier la description, la structure d'embase pourra être désignée « embase », la structure d'assise pourra être désignée « assise » et la structure de dossier pourra être désignée « dossier », l'homme du métier étant en mesure de déterminer s'il doit être compris, dans un contexte donné, si le terme est relatif à la structure d'un sous-ensemble ou au sous ensemble complet. Par exemple et suivant le contexte le terme « assise » désignera l'assise complète, avec la structure d'assise, les matelas et autres accessoires éventuels associés à l'assise, telle qu'elle est représentée schématiquement sur la figure 1a ou bien la structure d'assise, par exemple telle qu'elle est représentée schématiquement sur la figure 1b.

La figure 2a montre, simplifiée, la structure de la figure 1b en vue de profil.

On trouve sur la figure 2a les éléments principaux qui déterminent les capacités de mouvements, translations et rotations, dans un plan vertical XZ, élément qui sont détaillés ultérieurement.

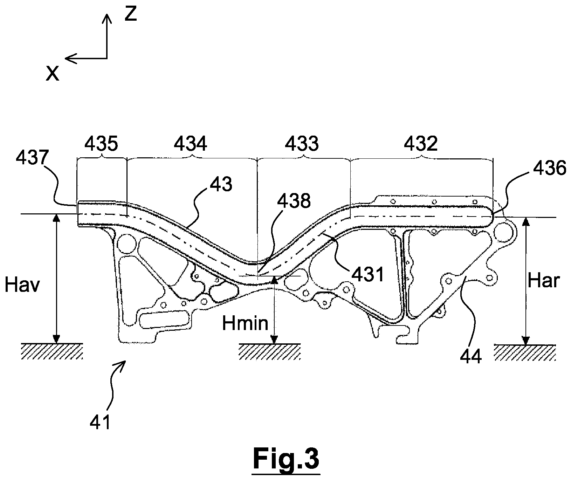

L'embase 40 comporte deux flasques 41 agencées latéralement et symétriquement sur des bords latéraux de l'embase, dont une seule est visible sur la vue de profil de la figure 2a et dont un exemple de réalisation, isolé du reste de la structure, est représenté sur la figure 3.

Chaque flasque 41 est formée principalement d'une platine 44 adaptée pour supporter des composants de l'embase et pour transmettre les efforts du siège vers le plancher 32 ou une autre structure sur laquelle est fixé le siège.

Chaque flasque supporte également une rampe de guidage 43 suivant un profil en double S, présentant un point bas dans une partie médiane de ladite rampe de guidage, destinée à guider le déplacement d'un galet arrière 54 d'assise et dont le détail de fonctionnement sera décrit ultérieurement.

Une rampe de guidage 43 comporte, depuis une extrémité arrière 436 jusqu'à une extrémité avant 437 :
- un segment arrière 432 ;
- un segment intermédiaire arrière 433 ;
- un segment intermédiaire avant 434 ;
- une segment avant 435.

Les quatre segments ainsi définis sont reliés par des segments de liaison courbes de sorte à assurer la continuité de la rampe de guidage et à définir une trajectoire 431 suivie par le galet arrière 54 entre les extrémités arrière 436 et avant 437.

Dans l'exemple illustré, chacun des segments arrière, intermédiaire arrière, intermédiaire avant et avant est sensiblement rectiligne.

Le segment arrière 432 et le segment avant 435 sont sensiblement horizontaux.

Le segment intermédiaire arrière 433 présente une pente descendante vers l'avant et le segment intermédiaire avant 434 présente une pente montante vers l'avant de sorte à déterminer au niveau de leur jonction un point bas 438 de la trajectoire 431 déterminée par la rampe de guidage 43 pour le galet arrière 54.

L'extrémité arrière 436 est située à une hauteur Har par rapport à un plan horizontal de référence, par exemple le plan du plancher 32 lorsque le siège est fixé sur un plancher, l'extrémité avant 437 est à une hauteur Hav par rapport au plan horizontal de référence, et le point bas 438 est à une hauteur Hmin inférieure aux hauteurs arrière 436 et avant 437.

Les rampes de guidage 43 supportées par chacune des flasques latérales 41 sont symétriques l'une de l'autre par rapport à un plan axial vertical XZ de symétrie verticale d'ensemble du siège et détermine chacune une trajectoire 431 du galet arrière 54 d'assise évoluant dans un plan vertical.

Dans la forme de réalisation illustrée sur la figure 3, chaque rampe de guidage est réalisée de manière intégrale avec la flasque qui la supporte.

Chaque flasque 41 supporte également une glissière 42, dans la forme illustrée un système de rails télescopiques comportant un rail fixe 421 sur lequel coulisse un rail coulissant 422.

Les deux rails télescopiques sont ici des rails rectilignes.

Le rail fixe 421, fixé sur la flasque 41, est maintenu dans un plan longitudinal vertical XZ et avec une pente inclinée vers l'avant du siège par rapport à la direction horizontale X.

Le rail coulissant 422 coulisse par rapport au rail fixe 421 entre une position rétractée et une position détendue dans laquelle ledit rail coulissant est avancé par rapport à la position rétractée.

L'assise 50 comporte un plateau d'assise 51, illustré en vue partielle éclatée sur la figure 1c, constituant une structure de support du matelas d'assise 21, et comportant des poutres longitudinales 511a, 511b supportant des panneaux supérieurs 512, 513.

Le plateau d'assise 51 est maintenu solidaire de l'embase 40 par des galets 54 arrières d'assise et par des chariots avants 52 d'assise.

Sur la figure 2a, les galets d'assise ne sont pas visibles et un seul chariot avant d'assise est visible. L'agencement des galets d'une part et des chariots d'autre part sont symétriques par rapport au plan axial vertical XZ de symétrie d'ensemble du siège.

Chaque chariot avant 52 d'assise est articulé sur le plateau d'assise autour d'un axe de basculement 521 de l'assise parallèle à l'axe latéral Y de sorte que le plateau d'assise 51 est en mesure de prendre une inclinaison plus ou moins inclinée vers l'arrière ou vers l'avant autour dudit axe de basculement.

Dans le cas présent, l'axe de basculement 521 est situé entre un bord arrière 514 et un bord avant 515 de l'assise de sorte que lors d'un basculement vers l'arrière du plateau d'assise 51 autour de l'axe de basculement 521, le bord avant 515 se déplace vers le haut et le bord arrière 514 vers le bas, et inversement le bord avant vers le bas et le bord arrière vers le haut lorsque le plateau d'assise bascule vers l'avant.

Chaque chariot d'assise 52 est également fixé rigidement au rail coulissant 422 correspondant de sorte que le glissement dudit rail coulissant par rapport au rail fixe 421 permet de déplacer, suivant une direction déterminée par l'orientation dudit rail fixe, ledit chariot d'assise et donc l'axe de basculement 521 et le plateau d'assise 51.

Chaque galet arrière 54 est fixé au plateau d'assise 51 dans une partie arrière dudit plateau d'assise, à proximité du bord arrière 514 dudit plateau d'assise, avec un axe arrière 541 parallèle à l'axe latéral Y.

Chaque galet arrière 54 est en outre engagé dans la rampe de guidage 43 correspondante de sorte à suivre la trajectoire 431 déterminée par ladite rampe lorsque l'assise 50, et donc également ledit galet arrière, est déplacée suivant la direction longitudinale X par rapport à l'embase 40.

Le dossier 60 est articulé sur l'assise 50 autour d'un axe de charnière 62 fixe par rapport au plateau d'assise 51 et fixe par rapport au dossier 60.

La rotation du dossier 60 est limitée vers l'avant par des butées 64 du plateau d'assise qui coopèrent avec des premières surfaces d'arrêt 65, figure 2a.

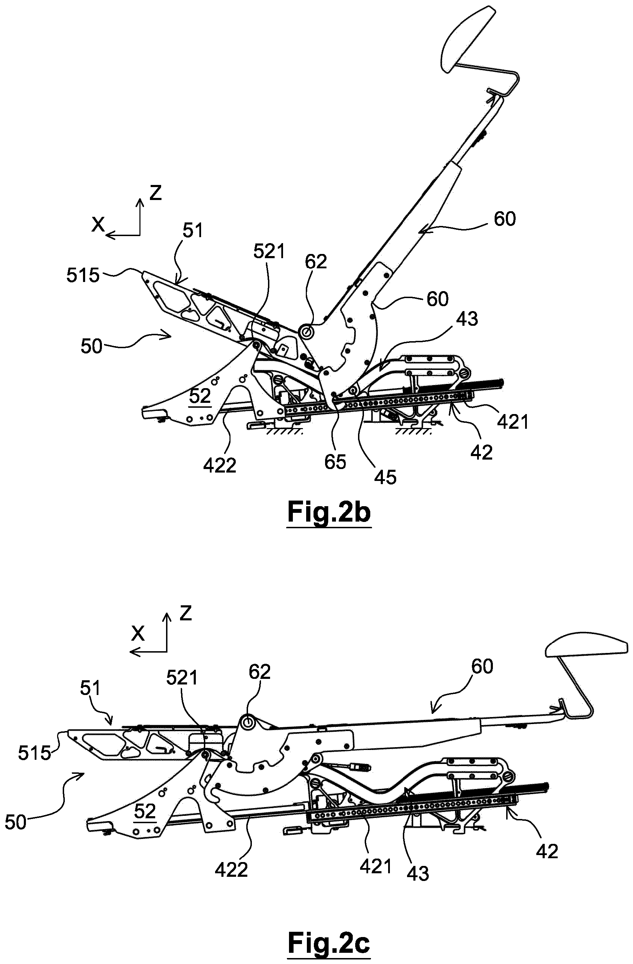

La rotation du dossier 60 est limitée vers l'arrière par les butées 64 du plateau d'assise qui coopèrent avec des secondes surfaces d'arrêt 66, figure 2c.
Les figures 2a, 2b et 2c illustrent la structure d'un siège dans trois positions différentes.
La figure 2a correspond à la position « assis » dans laquelle un occupant du siège est assis dans la position conventionnelle d'un fauteuil, par la position utilisée dans le cas des avions aux phases de décollage ou d'atterrissage.

Dans cette position, l'assise 50 est située à l'arrière de l'embase 40. Les galets 54 arrières d'assise sont situés aux extrémités arrières 436 des rampes de guidage 43, ou pour le moins proche desdites extrémités arrières des rampes de guidage, à la hauteur arrière Har.

Le dossier 60 est dans ce cas illustré dans sa position la plus relevée avec la butée 64 contre la première surface d'arrêt 65. Une inclinaison vers l'arrière du dossier 60 est possible dans ce cas sans mouvement de l'assise 50, même si elle est susceptible d'être limitée en pratique par l'environnement du siège.

La figure 2c montre la structure du siège lorsque le siège est réglé dans la position « couché », c'est-à-dire pour former un lit sensiblement horizontal. Dans ce cas, l'assise et le dossier sont alignés et tous deux sensiblement horizontaux, cette disposition pouvant être légèrement différente pour compenser des épaisseurs et formes de matelas d'assise 21 et de matelas de dossier 11 qui ne seraient pas identiques ou régulières.

Dans ce cas, l'assise 50 est avancée par rapport à l'embase 40 dans une position dans laquelle les galets 54 arrières d'assise sont situés aux extrémités avant 437 des rampes de guidage 43, ou pour le moins proches desdites extrémités avant des rampes de guidage, à la hauteur avant Hav.

Le déplacement vers l'avant de l'assise 50 est obtenu avec l'extension vers l'avant du rail coulissant 422 qui maintient et guide le chariot avant d'assise 52. Ce déplacement vers l'avant est accompagné d'une modification de la hauteur de l'axe de basculement 521, sur lequel est articulé le plateau d'assise 51, qui est fonction de l'inclinaison du rail fixe 421. Dans le cas présent, la hauteur dudit axe de basculement par rapport au plan horizontal de référence diminue en raison de l'inclinaison vers l'avant du rail fixe 421.

La hauteur résultante de l'axe de basculement 521 et la hauteur avant Hav des rampes de guidage sont déterminés dans cette position « couché » pour que l'assise soit dans la position sensiblement horizontale recherchée.

Comme illustré sur la figure 2c, le dossier est incliné vers l'arrière par rapport à l'assise jusqu'au contact des buttées 64 avec les secondes surfaces d'arrêt 66.

Les deux positions d'ensemble obtenues ici en condition « assis » et en condition « couché » sont conventionnelles pour un siège convertible en couchage.

Considérant maintenant la position « repos » illustrée sur la figure 2b, l'assise 50 est avancée par rapport à l'embase 40 dans une position suivant la direction longitudinale X intermédiaire entre celles des positions « assis » de la figure 2a et « couché » de la figure 2c.

Dans cette position, les galets 54 arrières d'assise dans les rampes de guidage se trouvent sur la trajectoire 431 au point bas 438 à la hauteur minimale Hmin. Dans cette position intermédiaire suivant la direction longitudinale, l'axe de basculement 521 se trouve également à une hauteur diminuée par rapport à sa hauteur dans la position « assis », du fait de la pente des rails fixes 421, mais cette diminution de hauteur est sensiblement inférieure à celle des galets arrières d'assise en raison de la forme concave accentuée des trajectoires 431 déterminées par les segments des rampes de guidage 43.

En conséquence, comme l'illustre la figure 2b, le plateau d'assise 51 se trouve basculé vers l'arrière autour de l'axe de basculement 521, par un abaissement de l'arrière 514 de l'assise, proche des galets arrières d'assise. En outre une hauteur du bord avant 515 de l'assise n'est pas augmentée par ce basculement vers l'arrière, ou n'est augmentée que d'une hauteur limitée, en raison de l'abaissement des chariots avant 52 d'assise fixés aux rails coulissants 422 dont la trajectoire descend vers l'avant.

Le déplacement de l'assise 50 suivant la direction longitudinale X est réalisé de préférence par un actionneur unique, non représenté, par exemple un actionneur électrique conventionnel.

Dans l'exemple de réalisation, le mouvement du dossier articulé sur l'assise autour de l'axe de charnière 62 est réalisé par un actionneur de dossier, non représenté, de sorte que le dossier peut être incliné à différentes valeurs pour chaque position longitudinale de l'assise, dans des limites d'interférences avec des structures environnantes.

La description du siège et de ses avantages seront mieux compris en regard du fonctionnement du siège illustré sur les figures 2a, 2b et 2c lors des conversions entre les positions « assis », « repos » et « couché ».

Considérant la figure 2a illustrant la position assis, l'assise 50 est dans une position reculée par rapport à l'embase 40 dans laquelle les galets 54 arrières d'assise sont situés aux extrémités arrières 436 des rampes de guidage 43, pour le moins proche desdites extrémités arrières. Dans cette position « assis », les chariots d'assise 52, fixés aux rails coulissants 422, sont également en position reculée.

Dans cette position de l'assise, les galets d'assise sont à la hauteur arrière Har des rails de guidage 43 et l'axe de basculement 521 est à une hauteur maximale sur les rampes inclinées formées par les glissières 42.

Les paramètres géométriques et dimensionnels sont choisis lors de la conception du siège pour déterminer, dans cette position arrière de l'assise, une hauteur de ladite assise par rapport au plancher, hauteur en général considérée en un point de référence SRP du siège, et une inclinaison longitudinale de l'assise par rapport à un plan horizontal adaptées au confort de la position « assis ».

En pratique, comme dans l'exemple illustré, l'assise présente une inclinaison longitudinale vers l'arrière suivant un angle par rapport à l'horizontal compris entre 5 et 15 degrés qui permet à un utilisateur du siège de se sentir calé et stable dans son siège.

Une hauteur d'un bord avant de l'assise 20, comportant son matelas d'assise 21, est déterminé pour qu'un passager d'une population cible prise comme référence puisse poser ses pieds à plat sur le plancher, ou sur un repose pieds, lorsqu'il est assis dans le siège.

Egalement, dans la configuration « assis » le dossier est de préférence redressé pour former avec l'assise un angle de 90 degrés, angle qui peut cependant être plus ouvert, soit par construction du siège de quelques degrés pour être compris entre 90 et 100 degrés, soit par des capacités de réglage du dossier laissant à l'utilisateur la possibilité d'incliner vers l'arrière plus ou moins le dossier par rapport à l'assise.

Il doit être noté ici que la position du siège, en particulier de l'assise soumise en utilisation au poids de l'occupant s'exerçant essentiellement verticalement, est naturellement stable du fait que les galets arrières sont situés dans les segments arrières des rampes de guidage sensiblement horizontaux. Dans cette position, l'actionneur et ou les moyens de blocage du siège sont donc modérément sollicité pour interdire une translation horizontale non sollicitée du siège.

Partant de la position « assis » du siège, lorsque l'utilisateur déplace son siège, en pratique l'assise du siège, vers l'avant, chaque galet 54 arrière d'assise va se déplacer dans la rampe de guidage 43 correspondante, dans un premier temps en suivant le segment arrière 432 de ladite rampe de guidage, et chaque chariot avant d'assise 52 va suivre une trajectoire en pente descendante déterminée par la glissière 42 correspondante.

Dans ce déplacement des galets arrières d'assise dans les segments arrières des rampes de guidage, l'angle de l'assise par rapport à l'horizontal va être fonction de la différence d'inclinaison entre lesdits segments arrières et les glissières.

Dans le siège de l'invention, les segments arrières 432 sont sensiblement horizontaux, en pratique avec un angle d'inclinaison par rapport à un plan horizontal compris entre l'angle correspondant à la valeur de l'angle d'inclinaison vers l'avant des glissières 42 et un angle, considéré depuis l'arrière vers l'avant, relevé au dessus du plan horizontal de 10 degrés. En particulier un angle relevé de 8 degrés apporte un mouvement d'aide au passage à la position debout pour l'occupant du siège sans que celui n'ai besoin d'une attention particulière pour rester assis lorsqu'il réalise une transition entre la position « assis » et la position « repos ».

Ainsi pour le cas extrême dans lequel les segments arrières sont parallèles aux glissières, l'inclinaison de l'assise est maintenue constante pendant le déplacement. Ce déplacement, s'il est arrêté lorsque les galets arrières d'assise sont encore dans les segments arrières, permet à l'occupant du siège d'augmenter l'inclinaison de son dossier vers l'arrière qui se trouve éloigné des obstacles pouvant limiter cette inclinaison.

En général, lorsque les segments arrières 432 et les glissières 42 forment un angle ouvert vers l'avant, comme dans le cas illustré sur les figures avec lesdits segments arrières sensiblement horizontaux, le plateau d'assise bascule progressivement vers l'avant autour de l'axe de basculement 521 lorsque ladite assise se déplace vers l'avant. L'amplitude de ce basculement vers l'avant est bien sûr fonction de l'angle entre les segments arrières et les glissières et d'une distance sur le plateau d'assise 51 entre l'axe arrière 541 et l'axe de basculement 521.

Ce mouvement angulaire du plateau d'assise, qui s'accompagne d'une diminution de la hauteur du bord avant de l'assise, et d'une diminution de l'inclinaison du dossier vers l'arrière par rapport à la direction verticale, permet à un utilisateur du siège de se placer dans une attitude plus proche de la position verticale et facilite, en particulier pour une personne ayant des difficultés à s'extraire d'un siège après être restée longtemps assise, le passage en position debout avec un effort réduit.

Lorsque le déplacement vers l'avant de l'assise est poursuivi, chaque galet 54 arrière d'assise parcourt ensuite le segment intermédiaire arrière 433 correspondant suivant une trajectoire descendante jusqu'au point bas 438.

Lors de ce déplacement, les chariots avants 52 d'assise sont également avancés sur les glissières 42 conduisant à un abaissement de l'axe de basculement 521 d'assise.

Toutefois, la pente descendante du segment intermédiaire arrière 433 est supérieure à la pente descendante de la glissière 42 conduisant à un abaissement relatif du galet arrière d'assise 54, et donc du bord arrière de l'assise 514 sensiblement à la jonction entre l'assise et le dossier, par rapport à l'axe de basculement 521 d'assise.

Le plateau d'assise est donc, dans cette position longitudinale du siège, basculé vers l'arrière par rapport à la situation précédente, comme illustré sur la figure 2b dans la position « repos ».

Avantageusement dans cette position « repos », le dossier 60 est placé dans une position pour former avec l'assise un angle plus ouvert que dans la position « assis », typiquement un angle compris entre 100 et 115 degrés.

La forme globale du siège résultant des mouvements de l'assise et du dossier correspond à un baquet dont l'inclinaison vers l'arrière est marquée pour déterminer en vue de profil une forme creusée qui procure à l'occupant du siège une grande stabilité et lui évite un glissement vers l'avant du siège, même en cas de mouvements du plancher 32, par exemple du fait de turbulences rencontrées par un avion en vol.

De plus l'abaissement d'ensemble du plateau d'assise associé à son basculement vers l'arrière évite une remontée du bord avant 515 de l'assise, ou au moins limite une amplitude de cette remontée. L'occupant du siège peut ainsi maintenir avec le siège dans la position « repos » ses pieds sur le plancher, ou sur le repose pieds associé au siège, comme dans la position « assis ».

Cette configuration permet donc de maintenir le confort de l'occupant sur une longue période en évitant de provoquer une compression des jambes au niveau du creux poplité dudit occupant.

Dans cette position, la stabilité de l'assise est assurée par le fait que les galets arrières 54 sont situés aux points bas 438 de la concavité de chaque rampe de guidage.

Lorsque le déplacement vers l'avant de l'assise est encore poursuivi, chaque galet arrière d'assise 54 parcourt ensuite le segment intermédiaire avant 434 correspondant suivant une trajectoire remontante depuis le point bas 438 qui se poursuit sur le segment avant 435 sensiblement horizontal jusqu'à l'extrémité avant 437 de la rampe de guidage, ou au moins jusqu'à proximité de ladite extrémité avant.

Lors de ce déplacement, les chariots avants 52 d'assise sont également avancés sur les glissières 42 conduisant à un nouvel abaissement de l'axe de basculement d'assise 521.

Dans cette position longitudinale de l'assise 50, l'assise est sensiblement horizontale dans la position voulue en position « couché ».

Cette position sensiblement horizontale est obtenue par un choix de la hauteur Hav de l'extrémité avant 437 de la rampe de guidage par rapport à la position en hauteur des chariots avant 52 d'assise, choix résultant d'une construction géométrique lors de la conception de la rampe de guidage 43.

Comme illustré sur la figure 2c, dans cette position « couché » le dossier 60 est incliné vers l'arrière pour se trouver sensiblement aligné avec l'assise 50 afin de former un plan de couchage. Cette inclinaison du dossier est possible sans interférence avec des structures situées derrière le siège en raison du déplacement vers l'avant du siège.

Comme dans le cas de la position « assis », dans cette position « couché » du siège, le siège et l'assise, soumise en utilisation au poids de l'occupant s'exerçant essentiellement verticalement, est naturellement stable du fait que les galets arrières sont situés dans les segments avants des rampes de guidage sensiblement horizontaux. Dans cette position, l'actionneur et ou les moyens de blocage du siège sont donc également modérément sollicité pour interdire une translation horizontale non sollicitée du siège.

Il est ainsi obtenu un siège convertible entre une position « assis » et une position « couché », avec une position « repos » intermédiaire améliorée sans exigence de mettre en œuvre un actionneur supplémentaire source de complexité, de masse supplémentaire et de surcoûts.

En outre les trois positions « assis », « repos » et « couché », destinées à des maintiens prolongés en utilisation, sont mécaniquement stables ce dont il résulte des sollicitations réduites de l'actionneur et ou de moyens de blocage des mouvements de l'assise et donc une amélioration de la fiabilité des composants sollicités.

## Revendications

1. Siège (100) pour passager d'un véhicule, comportant une assise (20) et un dossier (10), dont une structure d'assise (50) est solidaire d'une embase (40) par laquelle le siège peut être fixé au véhicule, ledit siège comportant au moins une position « assis », une position « couché » et au moins une position « repos », intermédiaire entre la position « assis » et la position « couché », dans lequel:
- un plateau d'assise (51) de la structure d'assise (50) est mobile en rotation autour d'un axe arrière (541) de ladite assise, orienté suivant une direction transversale Y horizontale du siège et perpendiculaire à un plan vertical XZ de symétrie d'ensemble du siège, ledit axe arrière étant situé suivant une direction longitudinale X du siège du côté d'un bord arrière (514) de l'assise ;
- le plateau d'assise (51) est mobile en rotation autour d'un axe de basculement (521) fixe par rapport à la structure d'assise (50), parallèle à l'axe arrière (541), situé suivant la direction longitudinale X, en avant dudit axe arrière et entre le bord arrière (514) de l'assise et un bord avant (515) de l'assise ;
- la structure d'assise (50) est déplacée vers l'avant lors d'une conversion du siège depuis la position « assis » vers la position « couché », conversion pendant laquelle :
+ l'axe de basculement (521) est déplacé sur l'embase (40) en suivant une première trajectoire descendante par rapport à la direction longitudinale X horizontale ;
+ l'axe arrière (541) est déplacé sur l'embase en suivant une seconde trajectoire (431) continue comportant successivement suivant le sens du déplacement vers l'avant de l'assise :
- un segment arrière (432) sensiblement horizontal ;
- un segment intermédiaire arrière (433) ayant une pente descendante supérieure à une pente suivie par l'axe de basculement (521) ;
- un segment intermédiaire avant (434) ayant une pente montante ;
- un segment avant (435) sensiblement horizontal.

2. Siège suivant la revendication 1 dans lequel, l'axe de basculement (521) est porté par au moins un chariot (52), ledit chariot étant monté sur une glissière (42) de l'embase (40) assurant un guidage dudit chariot suivant la première trajectoire lorsque la structure d'assise (50) est déplacée dans un sens longitudinal.

3. Siège suivant la revendication 1 ou la revendication 2 dans lequel, la seconde trajectoire (431) suivie par l'axe arrière (541) est déterminée par au moins une rampe de guidage (43) de l'embase dans laquelle rampe de guidage circule, lorsque la structure d'assise (50) est déplacée dans un sens longitudinal, au moins un galet (54) ou un patin de l'assise, un axe dudit galet ou d'un palier dudit patin déterminant l'axe arrière (541).

4. Siège suivant l'une des revendications 1, 2 ou 3 dans lequel, le segment intermédiaire arrière (433) et le segment intermédiaire avant (434) déterminent à leur jonction un point bas (438), à une hauteur Hmin suivant une direction verticale Z par rapport à un plan horizontal de référence, de la seconde trajectoire (431), auquel point bas se situe ledit axe arrière lorsque le siège est dans la position « repos », ladite hauteur Hmin étant telle que, compte tenu des caractéristiques dimensionnelles de la structure de l'assise (50) et de l'embase (40), lorsque le siège est dans la position « repos » :
- le plateau d'assise (51) est basculé vers l'arrière par rapport à la position dudit plateau d'assise dans la position « assis » du siège ;
- une hauteur résultante par rapport au plan de référence d'un bord avant de l'assise (20) est sensiblement à la hauteur dudit bord avant de l'assise lorsque le siège est dans la position « assis ».

5. Siège suivant l'une des revendications précédentes dans lequel, lorsque l'axe arrière (541) est situé à une jonction du segment arrière (432) et du segment intermédiaire arrière (433), l'assise est horizontale ou inclinée vers l'avant.

6. Siège suivant l'une des revendications précédentes dans lequel, le segment arrière (432) sensiblement horizontal est, considéré de l'arrière vers l'avant, incliné vers le bas au plus d'un angle correspondant à un angle de la première trajectoire descendante, et inclinée vers le haut au plus d'un angle de 10 degrés par rapport à un plan horizontal de référence, typiquement d'un angle de zéro degré.

7. Siège suivant l'une des revendications précédentes dans lequel, lorsque le siège est dans la position « assis », l'assise est inclinée vers l'arrière d'un angle par rapport à un plan horizontal de référence compris entre 5 et 15 degrés, typiquement environ 10 degrés.

8. Siège suivant l'une des revendications précédentes dans lequel, lorsque le siège est dans la position « repos », l'assise est inclinée vers l'arrière d'un angle par rapport à un plan horizontal de référence compris entre 18 et 30 degrés, typiquement environ 22 degrés.

9. Siège suivant l'une des revendications précédentes dans lequel, lorsque le siège est dans la position « couché », l'assise est sensiblement horizontale ou incliné d'un angle par rapport à un plan horizontal de référence inférieur ou égal à 5 degrés en valeur absolue.

10. Siège suivant l'une des revendications précédentes dans lequel, chaque glissière (42) de l'embase est inclinée vers l'avant d'un angle compris entre 2 et 8 degrés par rapport à un plan horizontal de référence, typiquement environ 5 degrés.

11. Siège suivant l'une des revendications précédentes, prises en combinaison avec la revendication 2 et la revendication 3, comportant, deux glissières (42) d'embase, deux chariots (52) supportant le plateau d'assise (51), deux rampes de guidage (43) fixes de l'embase, lesdites deux glissières, lesdits deux chariots et lesdites deux rampes de guidage étant agencés sensiblement symétriquement par rapport au plan vertical XZ de symétrie d'ensemble du siège.

12. Siège suivant l'une des revendications précédentes dans lequel, une structure de dossier (60) est articulée sur la structure d'assise (50) autour d'un axe de charnière (62) parallèle à la direction transversale Y, situé à proximité d'un bord arrière (514) de la structure d'assise, de sorte à déterminer un angle entre l'assise et le dossier réglable en utilisation du siège entre une valeur minimale sensiblement égale à 90 degrés, adaptée à la position « assis », et une valeur maximale sensiblement égale à 180 degrés, adaptée à la position « couché ».

13. Siège suivant la revendication 12, comportant au moins une butée (64) de l'embase (40) coopérant avec une première surface d'arrêt (65) de la structure de dossier (60) pour limiter le déplacement angulaire du dossier vers l'avant et coopérant avec une deuxième surface d'arrêt (66) de ladite structure de dossier pour limiter le déplacement angulaire dudit dossier vers l'arrière.

14. Siège suivant l'une des revendications précédentes dans lequel, le déplacement de l'assise entre la position « assis » et la position « couché » est assuré par un seul actionneur.

## Patentansprüche

1. Sitz (100) für Passagier eines Fahrzeugs, umfassend eine Sitzfläche (20) und eine Lehne (10), wobei eine Sitzflächenstruktur (50) mit einer Basisplatte (40) solidarisch ist, über die der Sitz an dem Fahrzeug befestigt werden kann, wobei der Sitz wenigstens eine "sitzende" Position, eine "liegende" Position und wenigstens eine "ruhende" Position umfasst, intermediär zwischen der "sitzenden" Position und der "liegenden" Position, in welchem:
- eine Sitzflächenebene (51) der Sitzflächenstruktur (50) in Rotation um eine hintere Achse (541) der Sitzfläche mobil ist, ausgerichtet gemäß einer querverlaufenden horizontalen Richtung Y des Sitzes und senkrecht zu einer vertikalen Symmetrieebene XZ der Gesamtheit des Sitzes, wobei die hintere Achse gemäß einer längsverlaufenden Richtung X des Sitzes der Seite einer hinteren Kante (514) der Sitzfläche positioniert ist;
- die Sitzflächenebene (51) in Rotation um eine Kippachse (521) mobil ist, fix in Bezug auf die Sitzflächenstruktur (50), parallel zu der hinteren Achse (541), positioniert gemäß der längsverlaufenden Richtung X, vor der hinteren Achse und zwischen der hinteren Kante (514) der Sitzfläche und einer vorderen Kante (515) der Sitzfläche;
- die Sitzflächenstruktur (50) bei einer Konversion des Sitzes von der "sitzenden" Position in die "liegende" Position nach vorne deplatziert wird, wobei während der Konversion:
+ die Kippachse (521) auf der Basisplatte (40) gemäß einer ersten in Bezug auf die längsverlaufende horizontale Richtung X abfallenden Bahn deplatziert wird;
+ die hintere Achse (541) auf der Basisplatte gemäß einer zweiten durchgehenden Bahn (431) deplatziert wird, nacheinander gemäß der Richtung der Deplatzierung der Sitzfläche nach vorne Folgendes umfassend:
- ein hinteres Segment (432), im Wesentlichen horizontal;
- ein intermediäres hinteres Segment (433), eine absteigende Neigung aufweisend größer als eine von der Kippachse (521) verfolgte Neigung;
- ein intermediäres vorderes Segment (434) mit einer steigenden Neigung;
- ein im Wesentlichen horizontales vorderes Segment (435).

2. Sitz nach Anspruch 1, in welchem die Kippachse (521) von wenigstens einem Schlitten (52) getragen wird, wobei der Schlitten auf einer Schiene (42) der Basisplatte (40) montiert ist, eine Führung des Schlittens gemäß der ersten Bahn gewährleistend, wenn die Sitzflächenstruktur (50) in einer längsverlaufenden Richtung deplatziert wird.

3. Sitz nach Anspruch 1 oder Anspruch 2, in welchem die zweite Bahn (431) gefolgt von der hinteren Achse (541) bestimmt wird durch wenigstens eine Führungsrampe (43) der Basisplatte, wobei in der Führungsrampe wenigstens eine Rolle (54) oder eine Kufe der Sitzfläche in einer längsverlaufenden Richtung zirkuliert, wenn die Sitzflächenstruktur (50) in eine längsverlaufende Richtung deplatziert wird, wobei eine Achse der Rolle oder eines Lagers der Kufe die hintere Achse (541) bestimmt.

4. Sitz nach einem der Ansprüche 1, 2 oder 3, in welchem das intermediäre hintere Segment (433) und das intermediäre vordere Segment (434) an ihrer Verbindungsstelle einen Tiefpunkt (438) bestimmen mit einer Höhe Hmin gemäß einer vertikalen Richtung Z in Bezug auf eine horizontale Referenzebene der zweiten Bahn (431), wobei an dem Tiefpunkt die hintere Achse positioniert ist, wenn sich der Sitz in der "ruhenden" Position befindet, wobei die Höhe Hmin in Anbetracht der dimensionalen Eigenschaften der Sitzflächenstruktur (50) und der Basisplatte (40), wenn sich der Sitz in der "ruhenden" Position befindet, folgendermaßen beschaffen ist:
- die Sitzflächenebene (51) wird in Bezug auf die Position der Sitzflächenebene in die "sitzende" Position des Sitzes nach hinten gekippt;
- eine resultierende Höhe in Bezug auf die Referenzebene einer vorderen Kante der Sitzfläche (20) befindet sich im Wesentlichen auf der Höhe der vorderen Kante der Sitzfläche, wenn sich der Sitz in der "sitzenden" Position befindet.

5. Sitz nach einem der vorhergehenden Ansprüche, in welchen die Sitzfläche horizontal oder nach vorne geneigt ist, wenn sich die hintere Achse (541) an einer Verbindungsstelle des hinteren Segments (432) und des intermediären hinteren Segments (433) befindet.

6. Sitz nach einem der vorhergehenden Ansprüche, in welchem das im Wesentlichen horizontale hintere Segment (432), von hinten nach vorne betrachtet, nach unten geneigt ist höchstens mit einem Winkel entsprechend einem Winkel der ersten abfallenden Bahn, und nach oben geneigt ist mit einem Winkel von höchstens 10 Grad in Bezug auf eine horizontale Referenzebene, typischerweise mit einem Winkel von null Grad.

7. Sitz nach einem der vorhergehenden Ansprüche, in welchem, wenn sich der Sitz in der "sitzenden" Position befindet, die Sitzfläche nach hinten geneigt ist mit einem Winkel in Bezug auf eine horizontale Referenzebene zwischen 5 und 15 Grad, typischerweise ungefähr 10 Grad.

8. Sitz nach einem der vorhergehenden Ansprüche, in welchem, wenn sich der Sitz in der "ruhenden" Position befindet, die Sitzfläche nach hinten geneigt ist mit einem Winkel in Bezug auf eine horizontale Referenzebene zwischen 18 und 30 Grad, typischerweise ungefähr 22 Grad.

9. Sitz nach einem der vorhergehenden Ansprüche, in welchem, wenn sich der Sitz in der "liegenden" Position befindet, die Sitzfläche im Wesentlichen horizontal ist oder in Bezug auf eine horizontale Referenzebene geneigt ist mit einem Winkel kleiner als oder gleich 5 Grad als absoluten Wert.

10. Sitz nach einem der vorhergehenden Ansprüche, in welchem jede Schiene (42) der Basisplatte nach vorne geneigt ist mit einem Winkel zwischen 2 und 8 Grad in Bezug auf eine horizontale Referenzebene, typischerweise ungefähr 5 Grad.

11. Sitz nach einem der vorhergehenden Ansprüche in Kombination mit Anspruch 2 und Anspruch 3, umfassend zwei Schienen (42) der Basisplatte, zwei die Sitzflächenebene (51) stützende Schlitten (52), zwei fixe Führungsrampen (43) der Basisplatte, wobei die zwei Schienen, die zwei Schlitten und die zwei Führungsrampen in Bezug auf die vertikale Symmetrieebene XZ der Gesamtheit des Sitzes im Wesentlichen symmetrisch sind.

12. Sitz nach einem der vorhergehenden Ansprüche, in welchem eine Lehnenstruktur (60) auf der Sitzflächenstruktur (50) um eine Scharnierachse (62) parallel zu der querverlaufenden Richtung Y artikuliert ist, platziert in der Nähe einer hinteren Kante (514) der Sitzflächenstruktur, solcherart, dass sie einen Winkel zwischen dem Sitzfläche und der Lehne bestimmt, verstellbar bei Verwendung des Sitzes zwischen einem minimalen Wert im Wesentlichen gleich 90 Grad, angepasst an die "sitzende" Position, und einen maximalen Wert im Wesentlichen gleich 180 Grad, angepasst an die "liegende" Position.

13. Sitz nach Anspruch 12, umfassend wenigstens einen Anschlag (64) der Basisplatte (40) kooperierend mit einer ersten Arretierfläche (65) der Lehnenstruktur (60) zum Eingrenzen der winkelförmigen Deplatzierung der Lehne nach vorne und kooperierend mit einer zweiten Arretierfläche (66) der Lehnenstruktur zum Beschränken der winkelförmigen Deplatzierung der Lehne nach hinten.

14. Sitz nach einem der vorhergehenden Ansprüche, in welchem die Deplatzierung der Sitzfläche zwischen der "sitzenden" Position und der "liegenden" Position durch ein einziges Stellglied gewährleistet wird.

## Claims

1. A seat (100) for a passenger in a vehicle, comprising a seat bottom (20) and a seat back (10), for which a seat frame (50) is supported by a base (40), by which the seat may be attached to the vehicle, said seat comprising at least one "seated" position, one "lying" position and at least one "resting" position, intermediate between the "seated" position and the "lying" position, in which:
- a seat plate (51) in the seat frame (50) that can be moved in rotation around a rear axis (541) of said seat, oriented in a transverse Y direction, horizontal to the seat and perpendicular to a vertical XZ plane of symmetry of the seat assembly, with said rear axis being positioned in an X longitudinal direction on the side of a rear edge (514) of the seat;
- the seat plate (51) can be moved in rotation around a tilting axis (521)which is fixed to the seat frame (50), parallel to the rear axis (541), positioned according to the X longitudinal direction, in front of said rear axis and between the rear edge (514) of the seat and a front edge (515) of the seat;- the seat frame (50) is moved forward during a seat conversion from the "seated" position to the "lying" position, a conversion during which:
+ the tilting axis (521) is moved on the base (40) following a first descending trajectory in relation to the horizontal X longitudinal direction;+ the rear axis (541) is moved on the base following a second continuous trajectory (431) comprising successively the direction of movement toward the front of the seat;
- an essentially horizontal rear segment (432);
- an intermediate rear segment (433) with a downslope greater than the slope followed by the tilting axis (521);
- an intermediate forward (434) segment with an upslope;
- an essentially horizontal front segment (435);

2. A seat according to claim 1 in which the tilting axis (521) is borne by at least one carriage (52), said carriage mounted on a rail (42) of the base (40) which guides said carriage according to the first trajectory when the seat frame (50) is moved in a longitudinal direction.

3. A seat according to claim 1 or claim 2 in which the second trajectory (431) followed by the rear axis (541) is determined by at least one guide ramp (43) of the base, in which guide ramp at least one seat roller or roller (54) circulates when the seat frame (50) is moved longitudinally, with one roller axis or bearing of said roller positioning the rear axis (541).

4. A seat according to claims 1, 2 or 3 in which the rear intermediate segment (433) and the forward intermediate segment (434) determine, at their junction, a bottom point (438), at a height of HMIN, according to a vertical direction Z in relation to a horizontal reference plane, of the second trajectory (431), at which bottom point the rear axis is situated when the seat is in the "resting" position, with the height HMIN being such that, given the dimensional characteristics of the seat frame (50) and of the base (40), when the seat is in the "resting" position:
- the seat plate (51) is tilted backward in relation to the position of said seat plate in the "seated" position of the seat;
- a resulting height in relation to the reference plain of a front edge of the seat (20) is essentially at the height of said front edge when the seat is in the "seated" position;

5. A seat according to one of the preceding claims in which, when the rear axis (541) is located at the junction of the rear segment (432) and of the intermediate rear segment (433), the seat is horizontal, or tilted forward.

6. A seat according to one of the preceding claims in which the essentially horizontal rear segment (432) is, viewed from back to front, tilted more toward the bottom at an angle corresponding to an angle of the first downsloping trajectory, and tilted more upward at an angle of 10 degrees in relation to a horizontal reference plane that is typically at a zero-degree angle;

7. A seat according to one of the preceding claims in which, when the seat is in the "seated" position, the seat is tilted backward at an angle, in relation to a horizontal reference plane, between 5 and 15 degrees, typically about 10 degrees;

8. A seat according to one of the preceding claims in which, when the seat is in the "resting" position, the seat is tilted backward at an angle, in relation to a horizontal reference plane, between 18 and 30 degrees, typically about 22 degrees;

9. A seat according to one of the preceding claims in which, when the seat is in the "lying" position, the seat is essentially horizontal or tilted at an angle, in relation to a horizontal reference plane, that is less than or equal to 5 degrees absolute value;

10. A seat according to one of the preceding claims in which each rail (42) of the base is tilted forward at an angle between 2 and 8 degrees in relation to a horizontal reference plane, typically about 5 degrees.

11. A seat according to one of the preceding claims, taken in combination with claim 2 and claim 3, comprising two rails (42) on the base, two carriages (52) supporting the seat plate (51), two guide ramps (43) fixed to the base, which two rails, which two carriages and which two guide ramps are laid out essentially symmetrically in relation to a vertical XZ plane of the overall symmetry of the seat.

12. A seat according to one of the preceding claims in which the structure of the back (60) is jointed on the seat frame (50) around a hinge line (62) parallel to the transverse Y direction, located close to the rear edge (514) of the seat frame, so as to determine an angle between the seat bottom and the seat back that can be adjusted, when using the seat, between a minimum value essentially equal to 90 degrees, adapted to the "seated" position, and a maximum value essentially equal to 180 degrees, adapted to the "lying" position.

13. A seat according to claim 12 comprising at least one base (40) abutment (64) working with a first stop surface (65) of the back frame (60) to limit the forward angular movement of the seat back and working with a second stop surface (66) of said back frame to limit the backward angular movement of said seat back.

14. A seat according to one of the preceding claims in which the movement of the seat between the "seated" position and the "lying" position is controlled by a single actuator.
